# EUROPÄISCHE PATENTSCHRIFT

(11) **EP 0 696 535 B1**
(45) Veröffentlichungstag und Bekanntmachung des Hinweises auf die Patenterteilung: **17.09.1997**
(21) Anmeldenummer: 95109969.6
(22) Anmeldetag: 27.06.1995
(51) Int. Cl.: B62D 21/02, B60D 1/56

(54) **Rahmenkopf für einen Tragrahmen eines Lastkraftwagens**
Frame head for a chassis frame of a truck
Tête de châssis pour un châssis porteur d'un camion

(30) Priorität: 09.08.1994 DE 4428101
(43) Veröffentlichungstag der Anmeldung: 14.02.1996
(73) Patentinhaber: DAIMLER-BENZ AKTIENGESELLSCHAFT, 70567 Stuttgart (DE)
(72) Erfinder: Bode, Peter, D-71384 Weinstadt (DE); Zittel, Siegfried, D-73733 Esslingen-Sulzgries (DE)

(56) Entgegenhaltungen:
- US-A- 4 023 823
- US-A- 4 950 010

## Beschreibung

Die Erfindung betrifft einen Rahmenkopf für einen Tragrahmen eines Lastkraftwagens, der mit zwei Längsträgern des Tragrahmens kraftübertragend verbindbar ist, und der mit einem Frontquerträger sowie mit zwei Rahmenanschlußstücken zur Anbindung an die Längsträger versehen ist, wobei der Frontquerträger als offenes Blechprofil gestaltet ist, mit dem ein Koppelmaul als getrenntes Bauteil verbindbar ist.

Die US-A 4 023 823 offenbart einen Rahmenkopf für einen Tragrahmen eines Lastkraftwagens, bei dem ein Koppelmaul von hinten an eine durch einen Stoßfänger und durch ein Verstärkungsprofil gebildete U-förmige Profilanordnung angesetzt ist. Das Koppelmaul ist zudem mit Stützstreben verbunden, die zwischen das Koppelmaul und die Prifilanordnung eingebracht sind und zu Längsträgern des Tragrahmens nach hinten geführt sind. Die U-Schenkel der aus dem Stoßfänger und dem Verstärkungsprofil gebildeten Profilanordnungen sind in großem Abstand zum Koppelmaul angeordnet und ragen lediglich über einen geringen Teil seiner Tiefe nach hinten ab.

Aus der DE 40 06 418 A1 ist ein Lastkraftwagen mit einem Tragrahmen bekannt, der einen Rahmenkopf in Form eines Vorderwagenmoduls aufweist. Der Vorderwagenmodul ist mit den Enden der beiden Rahmenlängsträger verbunden. Der Vorderwagenmodul weist einen Querträger sowie zwei Rahmenanschlußstücke auf, mittels derer er mit den Rahmenlängsträgern verbindbar ist. Dem Querträger des Vorderwagenmoduls sind Kühler-Gebläse-Einheiten vorgelagert.

Aufgabe der Erfindung ist es, einen Rahmenkopf der eingangs genannten Art zu schaffen, der einen vergrößerten Bauraum in Fahrzeuglängsrichtung bereitstellt, sowie einen einfachen Aufbau und eine hohe Stabilität verbunden mit einer Gewichtsoptimierung aufweist.

Diese Aufgabe wird dadurch gelöst, daß das Blechprofil des Frontquerträgers zu dem Tragrahmen nach hinten offen ist, daß das Koppelmaul, insbesondere als Schmiedeteil, von einer Rückseite her in das Blechprofil einsetzbar ist, daß das Blechprofil auf der Vorderseite auf Höhe der Position des Koppelmaules mit einem Durchtritt versehen ist, und daß das Blechprofil U-förmig gestaltet ist, wobei die beiden U-Schenkel des Blechprofiles das Koppelmaul über seine gesamte Tiefe oben und unten flankieren, und wobei das Koppelmaul an der Vorderseite des Blechprofiles an den Randbereichen des Durchtrittes sowie an den beiden U-Schenkeln des Blechprofiles durch Schweißnähte festgelegt ist. Die Integration des Koppelmaules bewirkt zum einen eine Verstärkung des Blechprofiles und damit eine erhöhte Stabilität, und zum anderen wird die eigentliche Ankopplungsfunktion des Koppelmaules direkt im Frontquerträger erzielt, ohne daß zusätzliche Halterungen o.ä. benötigt werden. Da das Koppelmaul im Frontquerträger integriert ist, ist es möglich, den Frontquerträger im vordersten Bereich direkt an der Front des Fahrerhauses des Lastkraftwagens anzuordnen. Dadurch wird hinter dem Frontquerträger zwischen den beiden Längsträgern des Tragrahmens in Fahrzeuglängsrichtung ein erheblich vergrößerter Bauraum bereitgestellt. Durch die Verschweißung des Koppelmaules mit den beiden U-Schenkeln des Blechprofiles wird eine kraftübertragende Integration des Koppelmaules in das Blechprofil erzielt, so daß sich für das Blechprofil eine erheblich erhöhte Stabilität ergibt. Dadurch, daß die beiden U-Schenkel des Blechprofiles das Koppelmaul über seine gesamte Tiefe oben und unten flankieren, ergibt sich für den Frontquerträger eine nach hinten offene Kastenform, die in Kombination mit der formschlüssigen Einbindung des Koppelmaules die erhöhte Stabilität des Frontquerträgers bewirkt. Die Ausgestaltung des Frontquerträgers als nach hinten offenes Blechprofil mit dem integrierten Koppelmaul ist für Lastkraftwagen bis zwanzig Tonnen Gesamtgewicht geeignet.

In Ausgestaltung der Erfindung ist ein von der Rückseite her an das Blechprofil des Frontquerträgers ansetzbares Deckblech vorgesehen, das mit dem Blechprofil zu einem geschlossenen Kasten verschweißbar ist. Diese Ausgestaltung ist für Lastkraftwagen mit einem Gesamtgewicht von mehr als zwanzig Tonnen geeignet, da der Frontquerträger dadurch eine geschlossene Kastenform und somit eine weiter erhöhte Stabilität aufweist. Das Deckblech erstreckt sich dabei über die gesamte Länge des Blechprofils.

In weiterer Ausgestaltung der Erfindung besteht jedes Rahmenanschlußstück aus zwei kastenförmig zusammengeschlossenen Bauteilen, wobei ein äußeres Bauteil aus einem schlagzähen Werkstoff hergestellt ist und ein inneres Bauteil mit mehreren Aufnahmen für Funktionsträger versehen ist, die einstückig an dem Bauteil an- oder ausgeformt sind. Dadurch ergibt sich für jedes Rahmenanschlußstück eine hohe Stabilität, durch die eine gute Kraftübertragung zwischen dem Frontquerträger und den Rahmenlängsträgern gewährleistet ist. Durch die Kombination der beiden Bauteile ist es zum einen möglich, die Rahmenanschlußstücke an die jeweils gewünschten Ausführungsformen des Lastkraftwagens anzupassen und zum anderen durch die Kombination verschiedener Materialien die technischen Eigenschaften der Rahmenanschlußstücke zu verbessern.

Weitere Vorteile und Merkmale der Erfindung ergeben sich aus den Unteransprüchen. Nachfolgend sind Ausführungsformen der Erfindung beschrieben und anhand der Zeichnungen dargestellt.
- Fig. 1: zeigt in perspektivischer Darstellung eine Ausführungsform eines erfindungsgemäßen Rahmenkopfes, der an zwei Längsträgern eines Tragrahmens eines Lastkraftwagens angeschlossen ist,
- Fig. 2: in vergrößerter Explosionsdarstellung einen Frontquerträger des Rahmenkopfes nach Fig. 1,
- Fig. 3: in vergrößerter Explosionsdarstellung ein Rahmenanschlußstück zur Anbindung des Rahmenkopfes nach Fig. 1 an die Längsträger des Tragrahmens,
- Fig. 4: in einer Explosionsdarstellung ein weiteres Rahmenanschlußstück ähnlich Fig. 3, das für eine weitere Ausführungsform eines Rahmenkopfes vorgesehen ist,
- Fig. 5: einen Schnitt durch den Frontquerträger nach Fig. 1 entlang der Schnittebene V in Fig. 1,
- Fig. 6: einen weiteren Schnitt durch den Frontquerträger nach Fig. 1 entlang der Schnittebene VI in Fig. 1,
- Fig. 7: einen Schnitt durch einen weiteren Frontquerträger ähnlich Fig. 1 auf Höhe der Schnittebene nach Fig. 5, bei dem das offene Blechprofil des Frontquerträgers durch ein Deckblech geschlossen ist,
- Fig. 8: den Frontquerträger nach Fig. 7 in einem Schnitt entsprechend der Schnittebene nach Fig. 6,
- Fig. 9: einen Schnitt durch das in Fahrtrichtung gesehene linke Rahmenanschlußstück nach Fig. 1 entlang der Schnittebene IX,
- Fig. 10: das Rahmenanschlußstück nach Fig. 9, jedoch entlang der Schnittebene X nach Fig. 1,
- Fig. 11: einen Schnitt durch ein weiteres Rahmenanschlußstück nach Fig. 4, auf Höhe der Schnittebene IX nach Fig. 1, und
- Fig. 12: einen Schnitt durch das Rahmenanschlußstück nach Fig. 11 auf Höhe der Schnittebene X nach Fig. 1.

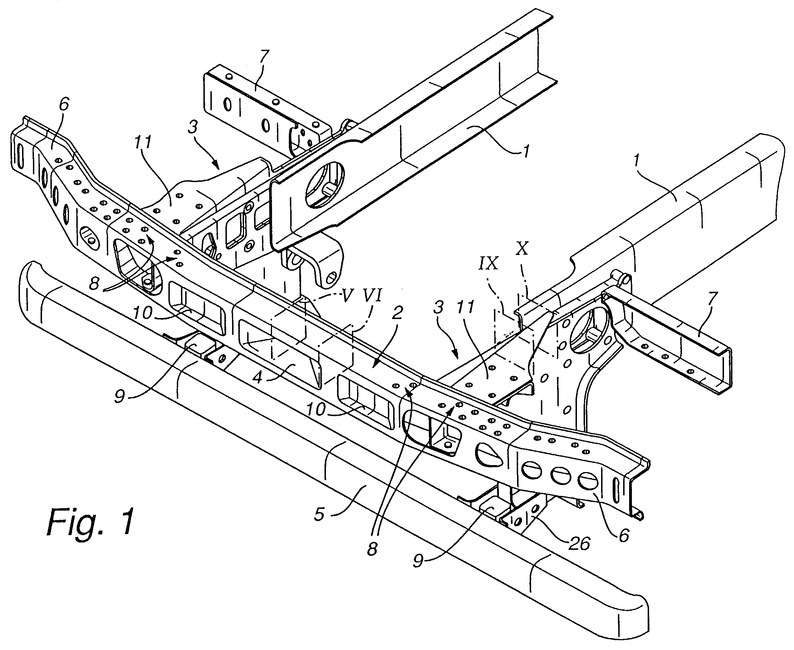

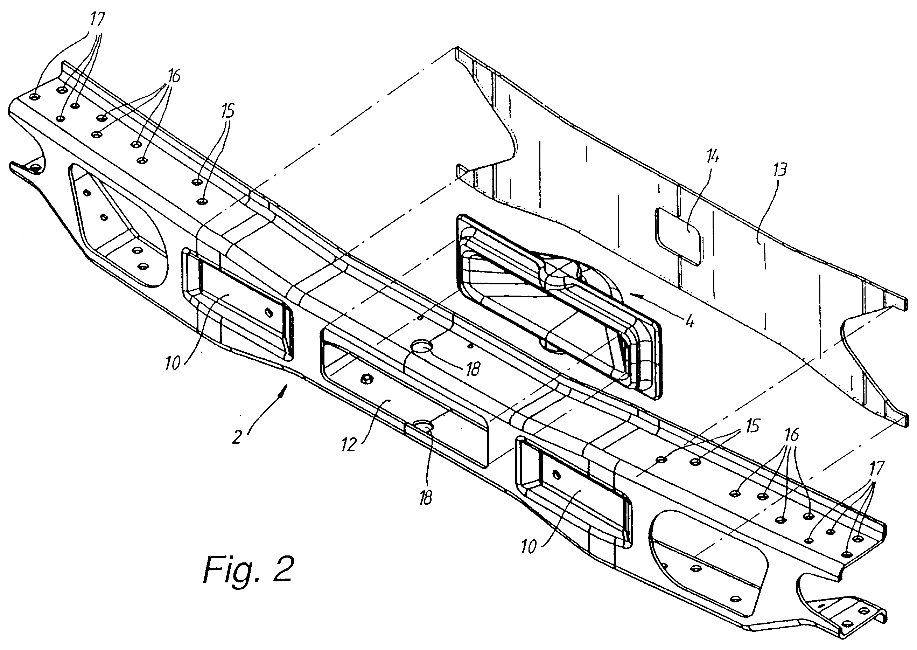

Ein Rahmenkopf nach Fig. 1 ist Teil eines Tragrahmens eines Lastkraftwagens. Der Tragrahmen des Lastkraftwagens weist zwei sich in Fahrzeuglängsrichtung erstreckende Längsträger (1) auf, an deren vorderen Stirnenden der Rahmenkopf befestigt ist. Der Rahmenkopf weist einen Frontquerträger (2) auf, der sich über die Fahrzeugbreite bis über die beiden Längsträger (1) hinaus erstreckt. Der Frontquerträger (2) ist mit Hilfe von zwei Rahmenanschlußstücken (3) an den beiden Längsträgern (1) befestigt. An den unteren Enden der beiden Rahmenanschlußstücke (3) ist mit Hilfe von Halterungen (9) ein Frontunterfahrschutz (5) angeordnet. Aus Übersichtlichkeitsgründen ist dabei die in Fahrtrichtung linke Halterung (9) lediglich teilweise dargestellt, wodurch auf dieser Seite ein Verstärkungsprofil (26) erkennbar ist. Auf beiden Seiten sind an den Frontquerträger (2) zwei Seitenprofilteile (6) angeschlossen, die mit dem Frontquerträger (2) vernietet sind. Der Frontquerträger (2) sowie der Frontunterfahrschutz (5) bilden die Vorderfront des Lastkraftwagens, so daß in Fahrtrichtung hinter dem Frontquerträger (2) zwischen den beiden Längsträgern (1) ein großer Bauraum für Kühl- und Antriebsaggregate zur Verfügung steht. Der Frontquerträger (2) weist ein U-förmiges Blechprofil auf (Fig. 2), das nach hinten zu den beiden Längsträgern (1) hin offen ist. In der die Fahrzeugfront bildenden Vorderseite des Blechprofils (12) ist in der Fahrzeugmitte eine etwa rechteckige Aussparung vorgesehen, durch die ein von der Rückseite her in das Blechprofil (12) eingesetztes Koppelmaul (4) zugänglich ist. Das Koppelmaul (4) stellt bei der dargestellten Ausführungsform ein zum Blechprofil (12) getrenntes Bauteil, und zwar ein Schmiedeteil, dar.

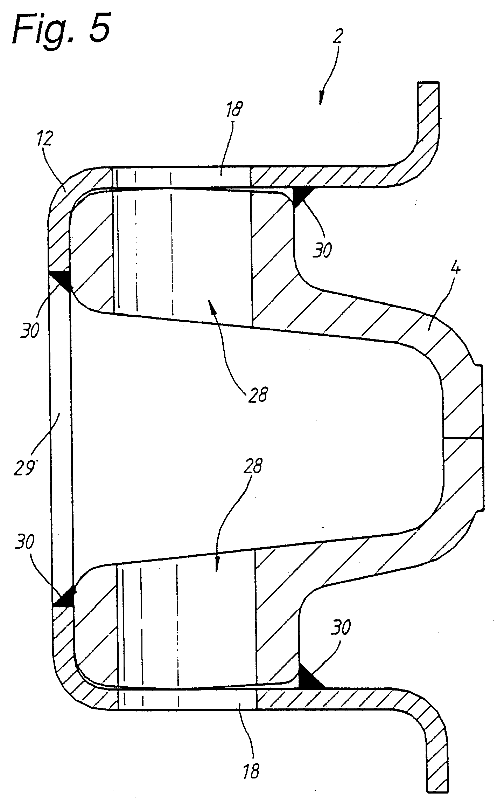

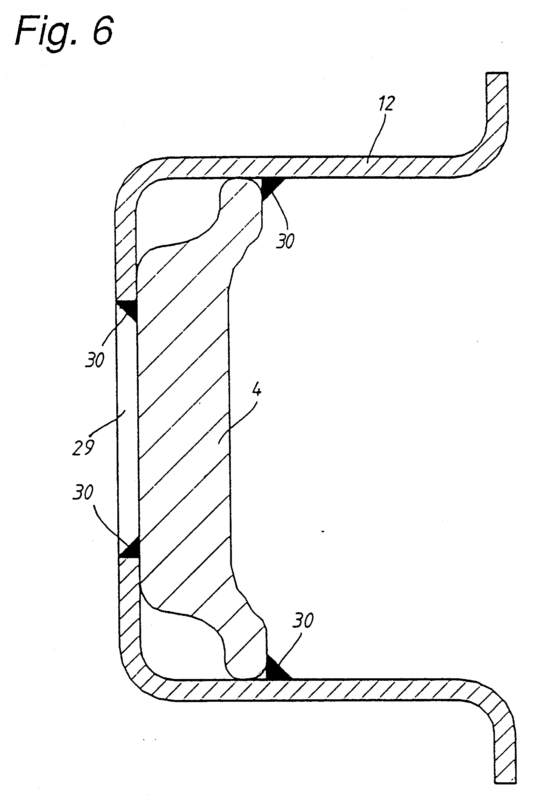

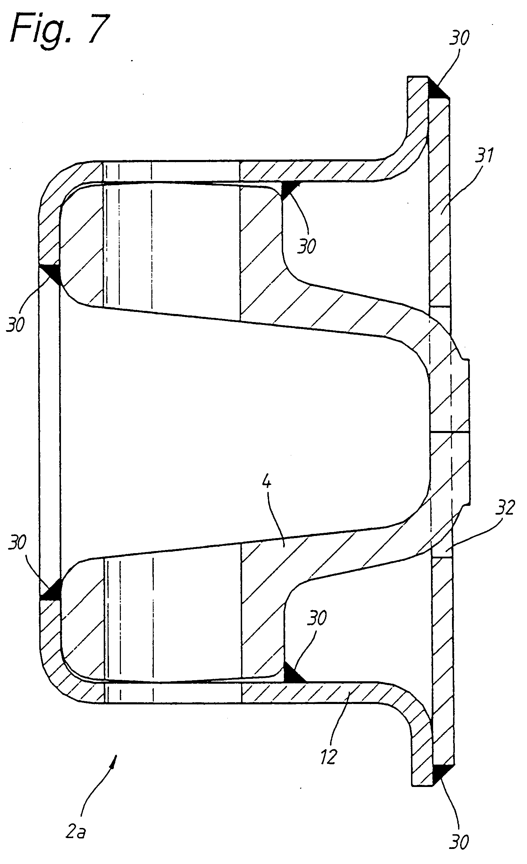

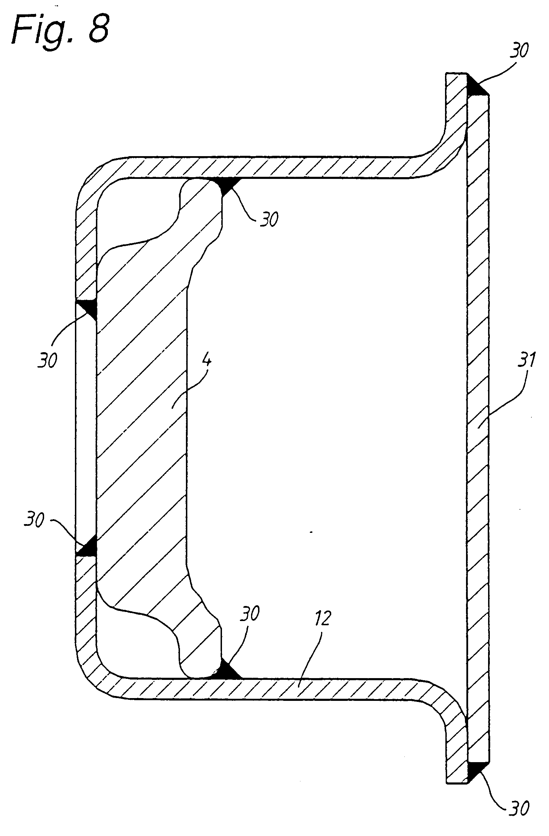

An die beiden seitlichen Rahmenanschlußstücke (3) ist auf Höhe der beiden Längsträger (1) jeweils eine nach außen abragende Strebe (7) zur Fahrerhauseinstiegbefestigung sowie zur Kotflügelhalterung vorgesehen. Beide Rahmenanschlußstücke (3) sind zudem in einem oberen Bereich mit Aufnahmestreben (11) für eine Fahrerhauslagerung versehen. Der Rahmenkopf nach Fig. 1 ist für Lastkraftwagen unter zwanzig Tonnen vorgesehen, bei dem zur Verstärkung des Blechprofiles (12) des Frontquerträgers (2) lediglich der relativ breite, glockenähnliche Körper des Koppelmaules (4) herangezogen wird. Bei der Ausführungsform nach Fig. 2, bzw. nach den Fig. 7 und 8, ist das Blechprofil (12) des Frontquerträgers (2) auf seiner Rückseite durch ein Deckblech (13) verschlossen. Sowohl das Koppelmaul (4) als auch das Deckblech (13) sind jeweils mit dem Blechprofil (12) verschweißt. Die verschiedenen Schweißnähte sind mit den Bezugszeichen (30) versehen. Das Deckblech (13) erstreckt sich über nahezu die gesamte Länge des Blechprofiles (12). Das Deckblech (13) ist auf Höhe der nach hinten ragenden Kuppel des glockenartigen Koppelmaules (4) mit einer quadratischen Aussparung (14) versehen, durch die eine formschlüssige Positionierung des Deckbleches (13) relativ zum Koppelmaul (4) ermöglicht ist. Durch die Kombination aus Deckblech (13) und Blechprofil (12) ergibt sich für den Frontquerträger (2) eine Kastenbildung, die eine hohe Stabilität des Frontquerträgers (2) gewährleistet. Eine ähnliche Kastenbildung wird auch bereits bei der Ausbildung des Frontquerträgers (2) nach den Fig. 1, 5 und 6 im Bereich des Koppelmaules (4) erzielt, da die maximale Tiefe des Koppelmaules (4) etwa der Tiefe des Blechprofiles (12) entspricht und ein umlaufender Rand des Koppelmaules (4) gegenüber der Vorderseite des Blechprofiles (12) etwas zurückversetzt ist. Die hohe Stabilität der Ausführung des offenen Frontquerträgers (2) nach den Fig. 1, 5 und 6 wird daher durch die Integration des Koppelmaules (4) in das Blechprofil (12) des Frontquerträgers (2) erzielt. Zu beiden Seiten des Koppelmaules (4) weist die Vorderseite des Blechprofiles (12) des Frontquerträgers (2) jeweils eine Einbuchtung (10) zur Aufnahme der Stoßfängerbefestigung auf. Die Ränder des Blechprofiles (12) sind auf einer Oberseite und einer Unterseite jeweils rechtwinklig nach außen abgebogen, wodurch sich die Steifigkeit des Blechprofils (12) weiter erhöht.

Um einen Kupplungsbolzen durch das in den Frontquerträger (2) integrierte Koppelmaul (4) hindurchzuschieben, sind in der Oberseite und in der Unterseite des Blechprofils (12) zwei Durchtritte (18) vorgesehen, die koaxial zu zwei Durchtritten (28) im Koppelmaul (4) ausgerichtet sind. Der Frontquerträger (2) weist in seinen Seitenbereichen mehrere kreisrunde Durchbrüche (15, 16, 17) auf, wobei die Durchbrüche (15 und 16) zur Befestigung der beiden Rahmenanschlußstücke (3) mit Hilfe von Nieten und die Durchbrüche (17) zur seitlichen Befestigung der beiden Seitenprofile (6) vorgesehen sind.

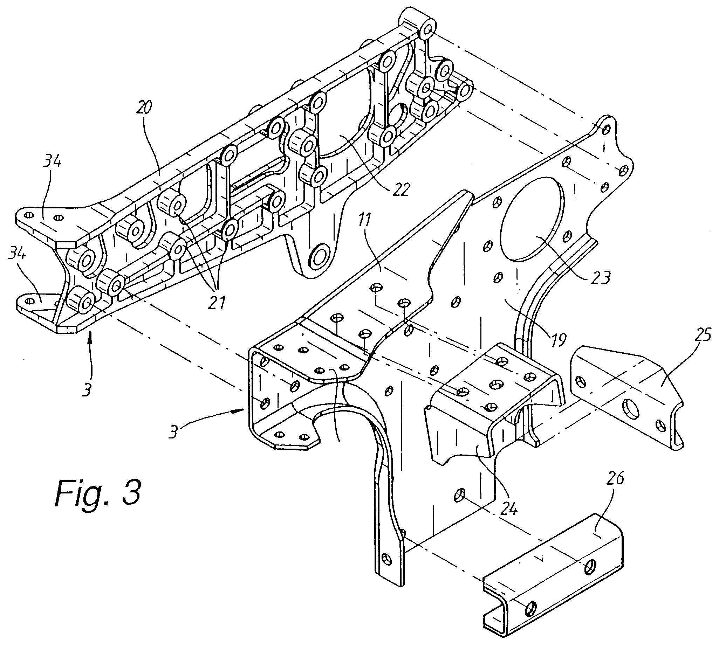

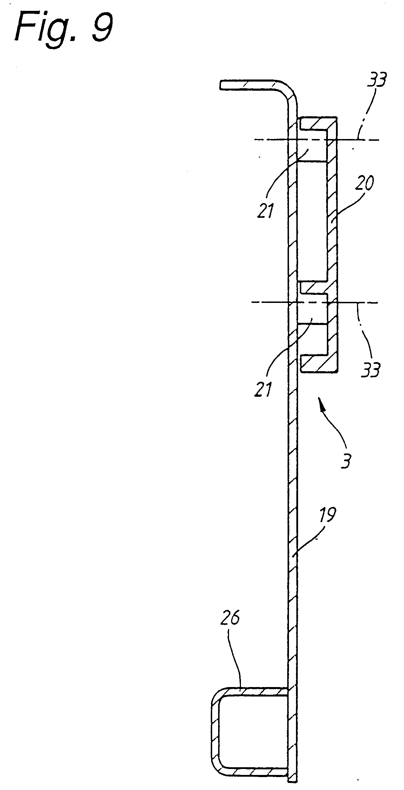

Die beiden Rahmenanschlußstücke (3) sind spiegelsymmetrisch, im übrigen jedoch identisch aufgebaut. Die nachfolgende Beschreibung des in Fahrtrichtung linken Rahmenanschlußstückes gilt daher in gleicher Weise für das in Fahrtrichtung rechte Rahmenanschlußstück (3). Jedes Rahmenanschlußstück (3) ist aus einem inneren Bauteil (20) und einem äußeren Bauteil (19) zusammengesetzt (Fig. 3, 9 und 10). Das äußere Bauteil (19) stellt ein Blechbiegeteil dar, das sich von der Höhe des Längsträgers (1) aus bis zum Frontunterfahrschutz (5) nach unten erstreckt. Das innere Bauteil (20) stellt ein längliches Sphärogußprofil dar, über dessen Fläche verteilt mehrere Abstützzapfen (21) angeformt sind. Die Abstützzapfen (21) sind im wesentlichen zylindrisch, wobei die dem Blechbiegeteil (19) zugewandten Stirnseiten alle in einer gemeinsamen Ebene liegen. Beim Gegeneinanderdrücken der beiden Bauteile des Rahmenanschlußstückes (3), sind das Blechbiegeteil (19) und das Sphärogußprofil (20) entlang einer vertikalen Fahrzeuglängsebene in Anlage. Da das Sphärogußprofil (20) eine offene Kastenform mit stegartig abragenden Rändern aufweist, wird durch das Zusammensetzen der beiden Bauteile (19 und 20) eine Kastenbildung des Rahmenanschlußstückes (3) erzielt.

Alle Abstützzapfen (21) sind mit koaxialen Bohrungen versehen. Das äußere Bauteil (19) weist auf Höhe dieser Bohrungen entsprechende Löcher auf, so daß die beiden Bauteile (19 und 20) mit Hilfe von Schrauben oder Nieten stabil miteinander verbindbar sind. Sowohl das Sphärogußprofil (20) als auch das Blechbiegeteil (19) weisen auf gleicher Höhe jeweils eine Aussparung (22 bzw. 23) für den Durchtritt von Kabelbäumen auf. Das innere Bauteil (20) weist in einem vorderen Stirnbereich zwei stabile Anschlußstücke (34) auf, die mit zu den Durchbrüchen (15) im Blechprofil (20) korrespondierenden Bohrungen zur Vernietung mit dem Blechprofil (12) versehen sind. In gleicher Weise weist das äußere Bauteil (19) in seinem vorderen Stirnbereich einen stabilen Anschlußwinkel (27) auf, der mit den Durchbrüchen (16) im Blechprofil (12) entsprechenden Bohrungen zur Befestigung an dem Frontquerträger (2) versehen ist. An den Anschlußwinkel (27) schließt nach hinten die Aufnahmestrebe (11) an, an deren Unterseite ein Stützwinkel (24) zur Erhöhung der Stabilität der Aufnahmestrebe (11) angeschweißt wird.

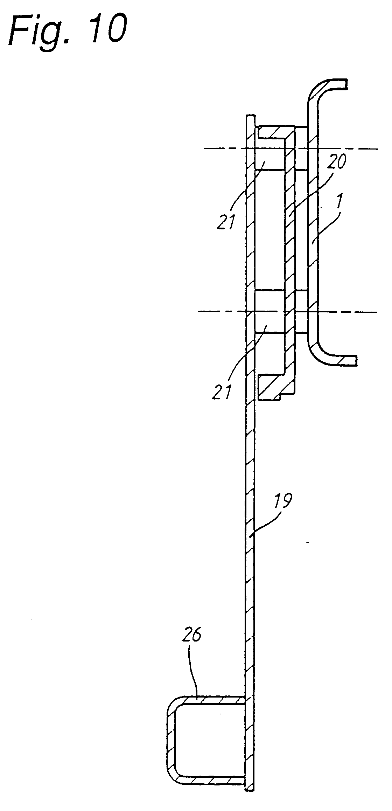

Mit dem äußeren Bauteil (19) ist zudem ein Aufnahmeteil (25) für einen Querträger und zusätzlich für einen Lenkerbock bei Vollluftfederfahrzeugen sowie ein Verstärkungsprofil (26) zur Halterung des Frontunterfahrschutzes (5) verbindbar. Auch das Verstärkungsprofil (26) ist U-förmig ausgeführt und ist mit seiner offenen Seite gegen den plattenförmigen Bereich des äußeren Bauteiles (19) gerichtet, so daß auch in diesem Bereich eine Kastenbildung zur Erhöhung der Stabilität erzielt wird. Wie aus den Fig. 3 und 10 weiterhin erkennbar ist, ragen die Abstützzapfen (21) auf Höhe des Längsträgers (1) zusätzlich auch zur gegenüberliegenden Seite, nämlich zur Wandung des Längsträgers (1) hin ab, so daß auch zum Längsträger (1) hin eine stabile Abstützung erreicht wird.

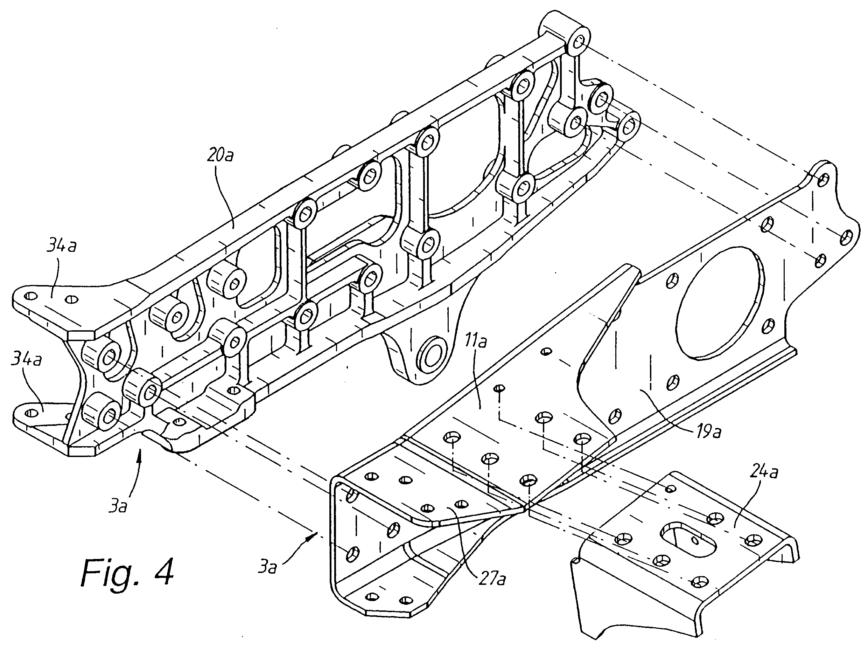

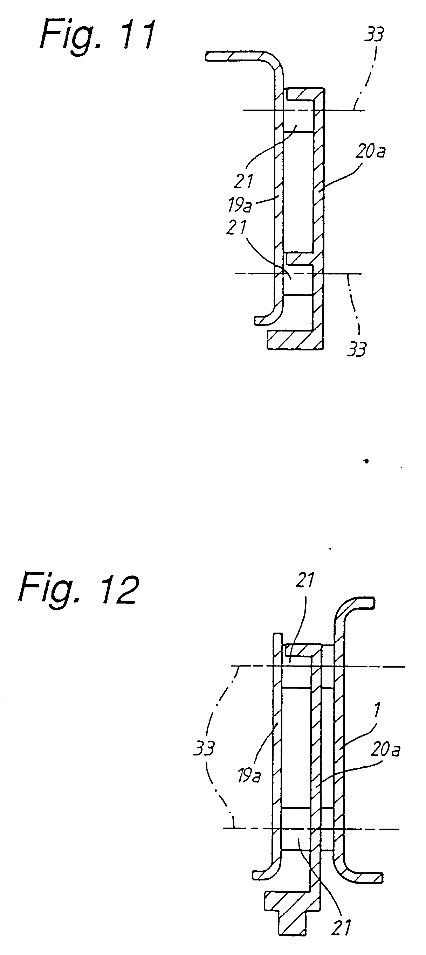

Das Rahmenanschlußstück (3a) nach den Fig. 4, 11 und 12 entspricht vom Aufbau her im wesentlichen dem Rahmenanschlußstück (3) nach den Fig. 3, 9 und 10. Auch hier ist ein äußeres Bauteil (19a) in Form eines Blechbiegeteiles mit einem inneren Bauteil (20a) in Form eines Sphärogußprofils kastenförmig zusammengefügt. Dieses Rahmenanschlußstück (3a) ist jedoch für Lastkraftwagen ohne Frontunterfahrschutz vorgesehen, weswegen das äußere Bauteil (19a) nicht über das innere Bauteil (20a) vertikal nach unten verlängert ist.

In gleicher Weise sind weitere Ausführungen von Rahmenanschlußstücken vorgesehen, die für die Aufnahme eines Kühlerschutzquerträgers entsprechend modifiziert sind. Die wesentliche Idee, ein äußeres und ein inneres Bauteil aus unterschiedlichen Materialien mit verschiedenen technischen Eigenschaften kastenförmig zusammenzusetzen, ist jedoch bei allen Ausführungsformen gleich. Bevorzugt sind drei Ausführungen des erfindungsgemäßen Rahmenkopfes, wobei eine erste für Volluftfederfahrzeuge zur Aufnahme von vorderen Lenkern und eines Frontunterfahrschutzes dient. Diese Ausführung ist in Fig. 1 dargestellt. Für Blattfederfahrzeuge ist der Rahmenkopf zur Aufnahme der Vorderfeder und des Frontunterfahrschutzes ausgebildet. Ist ein Blattfederfahrzeug ohne Frontunterfahrschutz vorgesehen, so ist zusätzlich - wie beschrieben - eine entsprechende Aufnahme für den Kühlerschutzquerträger als zusätzlicher Funktionsträger vorgesehen. Außerdem sind bei allen Ausführungen die Rahmenanschlußstücke mit Aufnahmen von Funktionsträgern wie Kühlerlagern und Kotflügelhalterungen versehen.

## Patentansprüche

1. Rahmenkopf für einen Tragrahmen eines Lastkraftwagens, der mit zwei Längsträgern des Tragrahmens kraftübertragend verbindbar ist, und der mit einem Frontquerträger sowie mit zwei Rahmenanschlußstücken zur Anbindung an die Längsträger versehen ist, wobei der Frontquerträger als offenes Blechprofil gestaltet ist, mit dem ein Koppelmaul als getrenntes Bauteil verbindbar ist,
**dadurch gekennzeichnet,**
daß das Blechprofil (12) des Frontquerträgers (2) zu dem Tragrahmen nach hinten offen ist, daß das Koppelmaul (4), insbesondere als Schmiedeteil, von einer Rückseite her in das Blechprofil (12) einsetzbar ist, daß das Blechprofil (12) auf der Vorderseite auf Höhe der Position des Koppelmaules (4) mit einem Durchtritt (29) versehen ist, und daß das Blechprofil (12) U-förmig gestaltet ist, wobei die beiden U-Schenkel des Blechprofiles (12) das Koppelmaul (4) über seine gesamte Tiefe oben und unten flankieren, und wobei das Koppelmaul (4) an der Vorderseite des Blechprofiles (12) an den Randbereichen des Durchtrittes (29) sowie an den beiden U-Schenkeln des Blechprofiles (12) durch Schweißnähte (30) festgelegt ist.

2. Rahmenkopf nach Anspruch 1,
**dadurch gekennzeichnet,**
daß ein von der Rückseite her an das Blechprofil (12) des Frontquerträgers (2) ansetzbares Deckblech (13) vorgesehen ist, das mit dem Blechprofil (12) zu einem geschlossenen Kasten verschweißbar ist.

3. Rahmenkopf nach Anspruch 1 oder 2, wobei jedes Rahmenanschlußstück aus zwei entlang einer vertikalen Fahrzeuglängsebene kastenförmig zusammengeschlossenen Bauteilen besteht,
**dadurch gekennzeichnet,**
daß ein äußeres Bauteil (19, 19a) aus einem schlagzähen Werkstoff hergestellt ist und ein inneres Bauteil (20, 20a) mit mehreren Aufnahmen für Funktionsträger versehen ist, die einstückig an dem Bauteil (20, 20a) an- oder ausgeformt sind.

4. Rahmenkopf nach Anspruch 3,
**dadurch gekennzeichnet,**
daß das äußere Bauteil (19, 19a) aus Blech hergestellt ist und das innere Bauteil (20, 20a) ein Guß- oder Schmiedeteil darstellt.

5. Rahmenkopf nach Anspruch 4,
**dadurch gekennzeichnet,**
daß das äußere Bauteil (19, 19a) für die Halterung eines Frontunterfahrschutzes (5) nach unten verlängert ist.

## Claims

1. Frame head for a supporting frame of a utility vehicle, which can be connected to two longitudinal support members so as to transmit force thereto, and provided with a front transverse support member and two frame connector pieces which are joined to the longitudinal support members, wherein the front transverse support member is an open metal profile, to which a coupling mouth-piece can be joined as a separate component,
**characterised in that**
the metal profile (12) of the front transverse support member (2) is open at the rear towards the supporting frame, the coupling mouth-piece (4), which is a welded part in particular, can be inserted from a rear face into the metal profile (12), the metal profile (12) is provided with an orifice (29) on the front face on a level with the height at which the coupling mouth-piece (4) is positioned and the metal profile (12) is of a U-shaped design, whereby the two legs of the U of the metal profile (12) flank the top and bottom of the coupling mouth-piece (4) across its entire depth and whereby the coupling mouth-piece (4) is fixed to the edge regions of the orifice (29) and to the two legs of the U of the metal profile (12) at the front face of the metal profile (12) by means of welded joints (30).

2. Frame head as claimed in claim 1,
**characterised in that**
a cover plate (13) is provided which can be positioned from the rear face onto the metal profile (12) of the front transverse member (2) and welded to the metal profile (12) to form a closed box.

3. Frame head as claimed in claim 1 or 2, whereby each frame connector piece consists of two components joined in a box design along a vertical longitudinal plane of the vehicle,
**characterised in that**
an outer component (19, 19a) is made from an impact-resistant material and an inner component (20, 20a) is provided with several receiving elements for functional supports, which are moulded as one piece onto or with the component (20, 20a).

4. Frame head as claimed in claim 3,
**characterised in that**
the outer component (19, 19a) is made from sheet metal and the inner component (20, 20a) is a cast or welded component.

5. Frame head as claimed in claim 4,
**characterised in that**
the outer component (19, 19a) is extended downwards so that it can be attached to a front under-run guard.

## Revendications

1. Tête de châssis pour un châssis porteur d'un camion, qui peut être reliée à deux longerons du châssis porteur, de manière à transmettre des forces, et qui est équipée d'une traverse avant ainsi que de deux éléments de raccordement du châssis servant à réaliser la liaison avec les longerons, la traverse avant étant agencée sous la forme d'un profilé en tôle ouvert auquel peut être raccordée une mâchoire d'accouplement agencée en tant que composant séparé,
caractérisée en ce
que le profilé en tôle (12) de la traverse avant (2) est ouvert vers l'arrière en direction du châssis porteur, que la mâchoire d'accouplement (4), réalisée notamment sous la forme d'une pièce forgée, peut être insérée à partir du côté arrière dans le profilé en tôle (12), que le profilé en tôle (12) comporte, sur sa face avant et à hauteur de la position de la mâchoire d'accouplement (4), une ouverture (29), et que le profilé en tôle (12) est agencé en forme de U, les deux branches du U du profité en tôle (12) flanquant en haut et en bas la mâchoire de l'accouplement (4) sur toute sa profondeur, et la mâchoire d'accouplement (4) étant fixée sur la face avant du profilé en tôle (12) au niveau des zones marginales de l'ouverture (29) ainsi qu'au niveau des deux branches en U du profilé en tôle (12) au moyen de cordons de soudure (30).

2. Tête de châssis selon la revendication 1, caractérisée en ce qu'il est prévu une tôle de recouvrement (13), qui peut être montée à partir de la face arrière sur le profité en tôle (12) de la traverse avant (2) et qui peut être soudée au profité en tôle (12) pour former un caisson fermé.

3. Tête de châssis selon la revendication 1 ou 2, dans laquelle chaque élément de raccordement de châssis est constitué de deux composants qui sont réunis sous la forme d'un caisson le long d'un plan longitudinal vertical du véhicule, caractérisée en ce qu'un composant extérieur (19,19a) est réalisé avec un matériau résilient et qu'un composant (20,20a) est équipé de plusieurs logements pour des supports de fonctions, qui sont formés d'un seul tenant sur ou dans le composant (20,20a).

4. Tête de châssis selon la revendication 3, caractérisée en ce que le composant extérieur (19,19a) est réalisé en tôle et que le composant intérieur (20,20a) représente une pièce coulée ou une pièce forgée.

5. Tête de châssis selon la revendication 4, caractérisée en ce que le composant extérieur (19,19a) pour la fixation d'un dispositif anti-encastrement avant (5) est prolongé vers le bas.
